# EUROPEAN PATENT SPECIFICATION

(11) **EP 2 434 636 B1**
(45) Date of publication and mention of the grant of the patent: **04.11.2020**
(21) Application number: 11181284.8
(22) Date of filing: 14.09.2011
(51) Int. Cl.: H02P 9/04, H02P 9/48

(54) **Generation system for rail cars**
Stromerzeugungssystem für Schienenfahrzeuge
Système de génération pour wagon ferroviaire

(30) Priority: 28.09.2010 JP 2010216323
(43) Date of publication of application: 28.03.2012
(73) Proprietor: Hitachi, Ltd., Chiyoda-ku Tokyo 100-8280 (JP)
(72) Inventor: Shimada, Motomi, Chiyoda-ku, Tokyo 100-8220 (JP); Toyota, Eiichi, Chiyoda-ku, Tokyo 100-8220 (JP)
(74) Representative: Mewburn Ellis LLP

(56) References cited:
- EP-A1- 2 055 548
- US-A1- 2002 157 881

## Description

### BACKGROUND OF THE INVENTION

### Field of the Invention

The present invention relates to a generation system for rail cars, and in particular, to a technique to implement a generation system for rail cars which controls the operation or generation output of an engine generator without the need for electric transmission of control information between an engine control system and a generation control system.

### Description of the Related Art

A rail car travels with iron wheels rolling on a rail surface and is thus characterized in that running resistance to the rail car is smaller than that to an automobile. In particular, recent electric rail cars carry out regeneration brake control. That is, during braking, the electric rail car allows a main motor to act as a generator to obtain a braking force, while simultaneously returning electric energy generated by the main motor during the braking to an overhead contact line so that the electric energy can be reused as power running energy for the other cars. Electric rail cars with the regeneration brake can travel with energy consumption limited to about half of that of electric rail cars without a regeneration brake. Thus, the regeneration brake control is an energy saving technique that takes advantage of the rail cars, subjected to a smaller running resistance.

On the other hand, local train lines with lower transport densities have successfully achieved fine passenger service with low costs using diesel rail cars requiring no infrastructures such as overhead contact lines and substations. However, the diesel rail car fails to include means for passing energy to other cars, such as an overhead contact line, and has thus not allowed regeneration energy to be reused in contrast to the electric rail car. Thus, successful energy saving with the diesel rail car has been considered to depend on development of an engine with reduced fuel consumption.

As a method for promoting energy saving also for diesel rail cars characterized as described above, a hybrid diesel rail car has been devised which is a combination of an engine and an electric storage device. The hybrid diesel rail car includes the electric storage device, which can temporarily absorb regeneration energy generated during braking. The absorbed regeneration energy is reused as a part of the energy required for acceleration to enable energy saving. The hybrid rail car is described in Japanese Patent Laid-Open Publication No. 2008-54408 in connection with a driving device for rail cars.

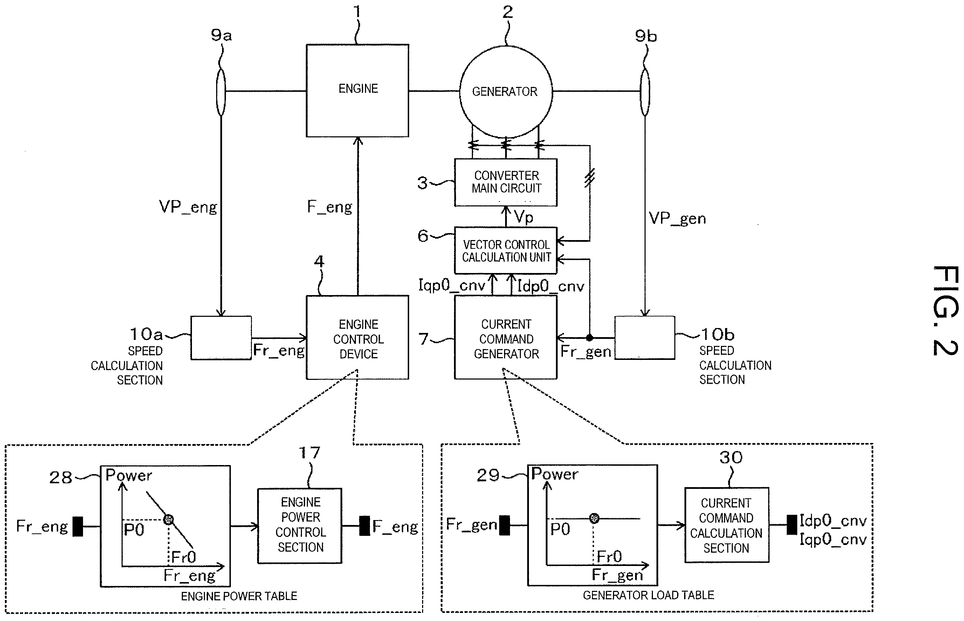

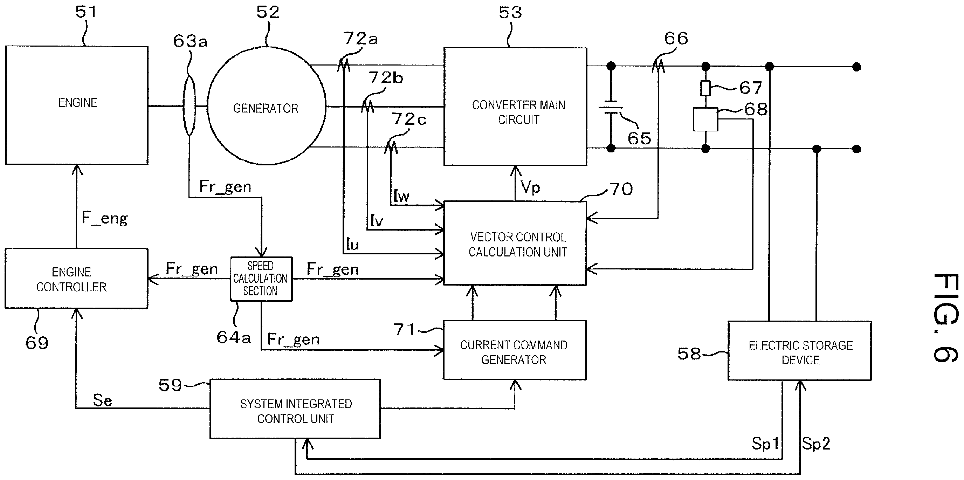

Figure 6 is a diagram of a configuration of apparatuses in the driving device for rail cars shown in Figure 2 of Japanese Patent Laid-Open Publication No. 2008-54408.

An engine 51 outputs a driving torque based on a fuel injection amount command F_eng from an engine controller 69. A generator 52 receives the driving torque from the engine 51 as an input. The generator 52 then converts the driving torque into three-phase AC power, and outputs the three-phase AC power. A converter device 53 receives the three-phase AC power output by the generator 52 as an input. The converter device 53 then converts the three-phase AC power into DC power, and outputs the DC power. Here, the converter device 53 performs voltage control via a gate signal Vp output by a PWM controller (vector control calculation unit) 70 so as to obtain a DC voltage based on a command Sc from a system integrated control unit 59.

The system integrated control unit 59 receives an internal state signal Sp1 from an electric storage device 58 as an input. The system integrated control unit 59 outputs an operation command Se to the engine controller 69, an operation command Sc to a constant power regulator (current command generator) 71, an operation command Si to an inverter device (not shown in the drawings), an operation command Sb to circuit breakers 62a, 62b, 62c, and 62d (not shown in the drawings), and an operation command Sp2 to a charge and discharge control device arranged in the electric storage device 58. The system integrated control unit 59 thus controls the general operational state of these apparatuses so as to set the electric storage amount of the electric storage device 58 within a given range.

A speed sensor 63a detects the rotation speed of the generator 52. A speed calculation unit 64a converts the rotation speed into a generator rotor frequency Fr_cnv. A filter condenser 65 smoothes the DC power resulting from the conversion by the converter device 53, particularly a voltage component thereof which varies at a high frequency, to stabilize the voltage of a DC section. A current sensor 66 detects a current flowing from the converter device 53 into the DC section via the filter condenser 65 or current flowing out of the DC section. A resistor 67 shunts the current flowing into or out of the DC section. A voltage sensor 68 detects a potential difference in the DC section based on the principle that the voltage across the resistor 67 is proportional to the value of a current flowing through the resistor 67.

An engine controller 69 receives the operation command Se from the system integrated control unit 59 and a rotation speed signal Fr_gen from a speed calculation section 64b as inputs. The engine controller 69 outputs a fuel injection amount command F_eng for adjusting power from the engine 51.

A constant power regulator 71 receives the operation command Sc from the system integrated control unit 59, a rotation speed signal F_cnv from the speed calculation section 64a, a DC section current detected value Icnv from the current sensor 66, and a DC section voltage detected value Vcnv from the voltage sensor 68 as inputs. The constant power regulator 71 outputs a voltage command Vc_cnv for determining the voltage control amount of the PWM controller 70, described below.

The PWM controller 70 outputs the voltage command Vc_cnv from the constant power regulator 71 and Fr_cnv from the speed calculation section 64b as inputs. The PWM controller 70 outputs a switching device gate signal Vp for performing PWM control in a driving manner by turning on and off a switching device (not shown in the drawings) forming the converter device 53.

In the driving device for rail cars in Japanese Patent Laid-Open Publication No. 2008-54408, the system integrated control unit determines whether or not a generation output from the engine is required based on the rotation speed of the generator, the rotation speed of the motor, and the internal state signal obtained from the electric storage device. The system integrated control unit gives the operation commands to the engine and the converter device to control a generation state. Moreover, if the generation output from the engine is not required, the system integrated control unit determines whether or not the engine can be stopped. Then, the system integrated control unit gives the operation command to the engine to command the engine to stop.

That is, both the operation of the engine and the operation of the converter device are controlled by the system integrated control unit. The driving device for rail cars in Japanese Patent Laid-Open Publication No. 2008-54408 is intended for hybrid diesel rail cars based on a series hybrid scheme. In particular, the driving device achieves idle stop control with adverse effects on the running performance of the car minimized. That is, the system integrated control unit strictly manages control timings so as to prevent starting and stopping of the engine from limiting the driving force generated by the inverter driving device and the motor. Thus, the system requires the control of the operation of the engine and converter device by the system integrated control unit. The control of the operations of the engine and converter device by the system integrated control unit requires transmission of control information between the system integrated control unit and the engine and between the system integrated control unit and the converter device. This in turn requires provision of communication means such as analog wires (hard wires) and a control information transmission device.

For the communication means between the system integrated control unit and the engine, an interface and communication means for the engine control device often vary among manufactures. Furthermore, even if the interface and the communication means are the same, an information transmission protocol or an information transmission format varies among the manufactures in almost all cases. Thus, the communication means between the system integrated control unit and the engine needs to be designed for each case. This leads to heavy operational burdens.

An object of the present invention is to provide a generation system for rail cars which controls the operation or generation output of the engine generator without the need for electric transmission of control information between the engine control system and the generation control system.

US 2002/0157881 proposes a power generation system for a hybrid electric vehicle.

### SUMMARY OF THE INVENTION

An engine control device configured to control power from an engine recognizes an engine rotation speed signal calculated by a speed calculation section based on information from a rotation detector attached to the engine. The engine control device thus controls the engine power in accordance with the engine rotation speed signal. Furthermore, a generator control device configured to control a generation output from a generator recognizes a generator rotation speed signal calculated by the speed calculation section based on information from a rotation detector provided in the generator. The generator control device thus controls the generation output in accordance with the generation rotation speed signal. Here, the engine and the generator are coupled together via a driving shaft. Thus, the engine rotation speed signal and the generator rotation speed signal may be considered to be the same within the range of signal accuracy required for the control of the operation or generation output of the engine generator. Thus, the engine control device and the generator control device recognize the respective speeds and set engine power characteristics with respect to the engine rotation speed and generation power characteristics with respect to the generator rotation speed so as to bring the engine power characteristics and the generation power characteristics into balance at a predetermined rotation speed. As a result, engine generation control can be achieved without the need to transmit information between the engine control and the generation control.

The present invention provides a generation system for rail cars according to claim 1.

### BRIEF DESCRIPTION OF THE DRAWINGS

Figure 1 is a diagram showing a configuration of apparatuses in an embodiment of a rail car engine control system according to the present invention;
Figure 2 is a diagram showing a scheme of engine generation control according to an embodiment of the present invention;
Figure 3 is a diagram showing the details of an engine control device and a generator control device according to an embodiment of the present invention;
Figure 4 is a diagram showing the details of an engine stop determination section according to an embodiment of the present invention;
Figure 5 is an operation time chart of engine stop control according to an embodiment of the present invention; and
Figure 6 is a diagram showing a configuration of a conventional rail car engine control system.

### DETAILED DESCRIPTION OF THE PREFERRED EMBODIMENTS

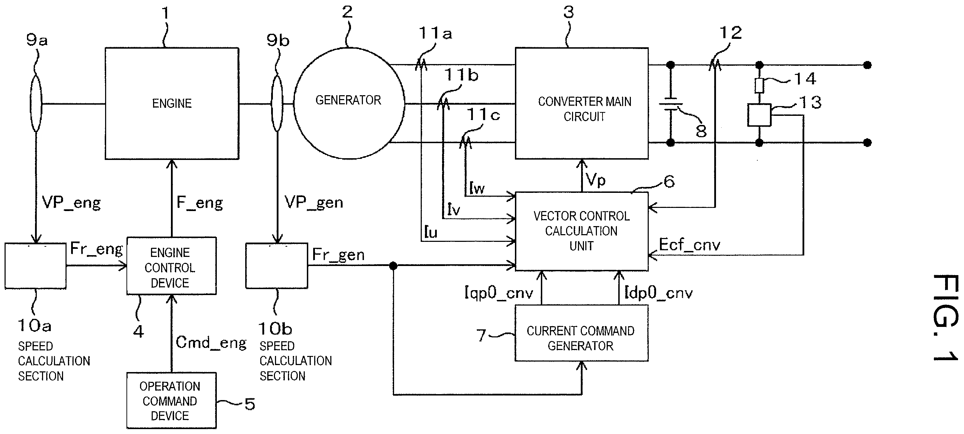

Figure 1 is a diagram showing a configuration of apparatuses in an embodiment of a rail car engine control system according to the present invention.

An engine 1 outputs a driving torque based on a fuel injection amount command F_eng from an engine control device 4. A generator 2 is coupled to the engine 1 via a driving shaft, and receives the driving torque from the engine 1 as an input. The generator 2 then converts the driving torque into three-phase AC power, and outputs the three-phase AC power.

A converter main circuit 3 receives the three-phase AC power output by the generator 2 as an input. The converter main circuit 3 then converts the three-phase AC power into DC power, and outputs the DC power. A DC side voltage of the converter main circuit 3 is adjusted to a voltage value within a given range by a DC voltage source such as an electric storage device and a generation system.

A vector control calculation unit 6 receives three-phase AC currents Iu, Iv, and Iw detected by AC current detectors 11a, 11b, and 11c, a rotation speed signal Fr_gen from a speed calculation section 10b, a DC section current detection value I_cnv from a DC current detector 12, a DC section voltage detection value V_cnv from a voltage sensor 13, and a torque current command value Iqp0_cnv and an exciting current command value Idp0_cnv generated by a current command generator 7, as inputs. The vector control calculation unit 6 thus calculates a voltage command that determines the voltage control amount of the converter main circuit 3. The vector control calculation unit 6 then correspondingly outputs a switching device gate signal Vp for performing PWM control by turning on and off a switching device (not shown in the drawings) forming the converter main circuit 3.

A filter condenser 8 smoothes the DC power resulting from the conversion by the converter main circuit 3, particularly a voltage component thereof which varies at a high frequency, to stabilize the voltage of a DC section.

A rotation speed detector 9a detects the rotation speed of the engine 1. A speed calculation section 10a converts the rotation speed into the generator rotation speed signal Fr_eng.

A rotation speed detector 9b detects the rotation speed of the generator 2. The speed calculation section 10b converts the rotation speed into the generator rotation speed signal Fr_gen.

A DC current detector 12 detects a current flowing from the converter main circuit 3 into the DC section via the filter condenser 8 or flowing out of the DC section.

A voltage detector resistor 14 shunts the current flowing into or out of the DC section. A voltage sensor 13 detects the voltage of the DC section based on the principle that the voltage across the resistor 14 is proportional to the value of a current flowing through the resistor 14.

An engine control device 4 receives an operation command Cmd_eng from an operation command device 5 and the rotation speed signal Fr_eng from the speed calculation section 10a as inputs. The engine control device 4 outputs a fuel injection amount command F_eng for adjusting power from the engine 1.

A current command generator 7 receives the generator rotation speed signal Fr_gen as an input. The current command generator 7 outputs the torque current command value Iqp0_cnv and exciting current command value Idp0_cnv to be provided to the vector control calculation unit 6 to allow the converter main circuit 3 to adjust the generation power of the generator 2.

The above-described configuration can implement the following operation.

The engine control device 4 configured to control the power from the engine 1 recognizes the rotation speed signal Fr_eng calculated by the speed calculation section 10a based on the information from the rotation detector 9a. The engine control device 4 thus controls engine power (driving torque). Furthermore, the current command generator 7 configured to control the generation output from the generator 2 recognizes the rotation speed signal Fr_gen calculated by the speed calculation section 10b based on the information from the rotation detector 9b. The current command generator 2 thus controls the generation power torque of the generation output. Here, the engine 1 and the generator 2 are coupled to each other via the driving shaft and thus rotate at the same speed (Fr_eng = Fr_gen).

The above-described configuration successfully brings the engine power (driving torque) and the generation power torque of the generator into balance by coupling the engine and the generator via the driving shaft. Furthermore, in this control scheme, the engine power is determined in accordance with the rotation speed of the engine, and the generation power of the generator is determined in accordance with the rotation speed of the generator. Since the engine and the generator rotate at the same speed, the engine generation control requires no transmission of information between the engine control and the generator control provided that the engine control device and the generator control device recognize the speeds respectively.

That is, the present invention can provide a generation system for rail cars which controls the operation or generation output of the engine generator without the need for electric transmission of control information between the engine control system and the generation control system. Namely, the engine control system and the generation control system can perform control independently of each other.

Figure 2 is a diagram showing a scheme of engine generation control according to an embodiment of the present invention.

The engine 1 outputs a driving torque based on the fuel injection amount command F_eng from the engine control device 4. The generator 2 is coupled to the engine 1 via the driving shaft, and receives the driving torque from the engine 1 as an input. The generator 2 then converts the driving torque into three-phase AC power, and outputs the three-phase AC power.

The converter main circuit 3 receives the three-phase AC power output by the generator 2 as an input. The converter main circuit 3 then converts the three-phase AC power into DC power, and outputs the DC power.

The vector control calculation unit 6 receives the three-phase AC currents Iu, Iv, and Iw detected by the AC current detectors 11a, 11b, and 11c, the rotation speed signal Fr_gen from the speed calculation section 10b, the DC section current detection value I_cnv and DC section voltage detection value V_cnv not shown in the drawings, and the torque current command value Iqp0_cnv and exciting current command value Idp0_cnv generated by the current command generator 7, as inputs. The vector control calculation unit 6 thus calculates the voltage command that determines the voltage control amount of the converter main circuit 3. The vector control calculation unit 6 then correspondingly outputs the switching device gate signal Vp for performing PWM control by turning on and off the switching device (not shown in the drawings) forming the converter main circuit 3.

The rotation speed detector 9a detects the rotation speed of the engine 1. The speed calculation section 10a converts the rotation speed into the engine rotation speed signal Fr_eng.

The rotation speed detector 9b detects the rotation speed of the generator 2. The speed calculation section 10b converts the rotation speed into the generator rotation speed signal Fr_gen.

The engine control device 4 receives the operation command Cmd_eng from the operation command device 5 and the rotation speed signal Fr_eng from the speed calculation section 10a as inputs. The engine control device 4 outputs the fuel injection amount command F_eng for adjusting power from the engine 1.

Now, an example of a control scheme will be discussed which is carried out by the engine control device 4 and the current command generator 7 so as to drive the generator 2 by the power from the engine 1 to generate power.

An engine power table 28 receives the engine rotation speed signal Fr_eng as an input, and outputs an engine power request P_eng. The relationship between the engine rotation speed signal Fr_eng and the engine power request P_eng is characterized in that a particular engine power request P0 is output at a particular rotation speed Ff0e. The relationship is further characterized in that the value of the engine power request P_eng decreases with increasing value of the engine rotation speed signal Fr_eng or any engine power request P_eng is output at the engine rotation speed Ff0e (constant rotation number control property). An engine power control section receives the engine power request P_eng as an input. The engine power control section determines the fuel injection amount of the engine which satisfies the output request, and outputs the fuel injection amount command F_eng.

The current command generator 7 receives a generator rotor frequency Fr_gen as an input. The current command generator 7 outputs the torque current command value Iqp0_cnv and exciting current command value Idp0_cnv to be provided to the vector control calculation unit 6 to allow the converter main circuit 3 to adjust the generation power of the generator 2.

A generator power table receives the generator rotation speed signal Fr_gen as an input, and outputs a generator power request P_gen. The relationship between the generator rotation speed signal Fr_gen and the generator power request P_gen is characterized in that a particular generator power request P0 is output at a particular rotation speed Ff0g. Further the relationship is characterized in that the value of the generator power request P_gen increases consistently with the value of the generator rotation speed signal Fr_gen or in that the generator power request P0 is output at any generator rotation speed Ff0gP_gen (constant generator power property). A current command calculation section receives the generator power request P_gen and the generator rotation speed signal Fr_gen (not shown in the drawings) as inputs. The current command calculation section thus converts the generator power request P_gen and the generator rotation speed signal Fr_gen into exciting current commands Idp0_cnv and Idq0_cnv for vector control.

The above-described configuration can implement the following operation.

The engine control device 4 configured to control the power from the engine 1 recognizes the engine rotation speed signal Fr_eng calculated by the speed calculation section 10a based on information from the rotation detector 9a. The engine control device 4 thus controls the engine power. Furthermore, the current command generator 7 configured to control the generation output from the generator 2 recognizes the rotation speed signal Fr_gen calculated by the speed calculation section 10b based on the information from the rotation detector 9b. The current command generator 7 thus controls the generation output. Here, the engine 1 and the generator 2 are coupled together via the driving shaft. Thus, the engine 1 and the generator 2 rotate at the same speed (Fr_eng = Fr_gen). The engine power request P_eng from the engine power table is characterized in that the value of the engine power request P_eng decreases with increasing value of the engine rotation speed signal Fr_eng or in that any engine power request P_eng is output at the engine rotation speed Ff0e (constant rotation number control property). In contrast, the generator power request P_gen from generator power table is characterized in that the value of the generator power request P_gen increases consistently with the value of the generator rotation speed signal Fr_gen increases or in that the generator power request P0 is output at any generator rotation speed Ff0gP_gen (constant generator power property). Thus, the engine power and the generator power are such that at the particular rotation speed P0 (common to both the engine and the generator), the particular engine power P0 and the particular generator power P0 are in balance, allowing stable generation control to be continued.

The above-described configuration brings the engine power and the generation power of the generator into balance by coupling the engine and the generator together via the driving shaft. Furthermore, in this control scheme, the engine power is determined in accordance with the engine rotation speed, and the generation power of the generator is determined in accordance with the rotation speed of the generator. Since the engine and the generator rotate at the same speed, the engine generation control requires no transmission of information between the engine control and the generator control provided that the engine control device and the generator control device recognize the respective speeds.

That is, the configuration can provide a generation system for rail cars which controls the operation or generation output of the engine generator without the need for electric transmission of control information between the engine control system and the generation control system.

When the engine control device and the generator control device recognize the respective speeds, set the engine power characteristics with respect to the engine rotation speed and the generation power characteristics with respect to the generator rotation speed, and control the engine and the generator in accordance with the respective rotation speeds, a generation system for rail cars can be provided which can control the operation or generation output of the engine generator even in a simple configuration that performs no electric transmission of control information between the engine control system and the generation control system.

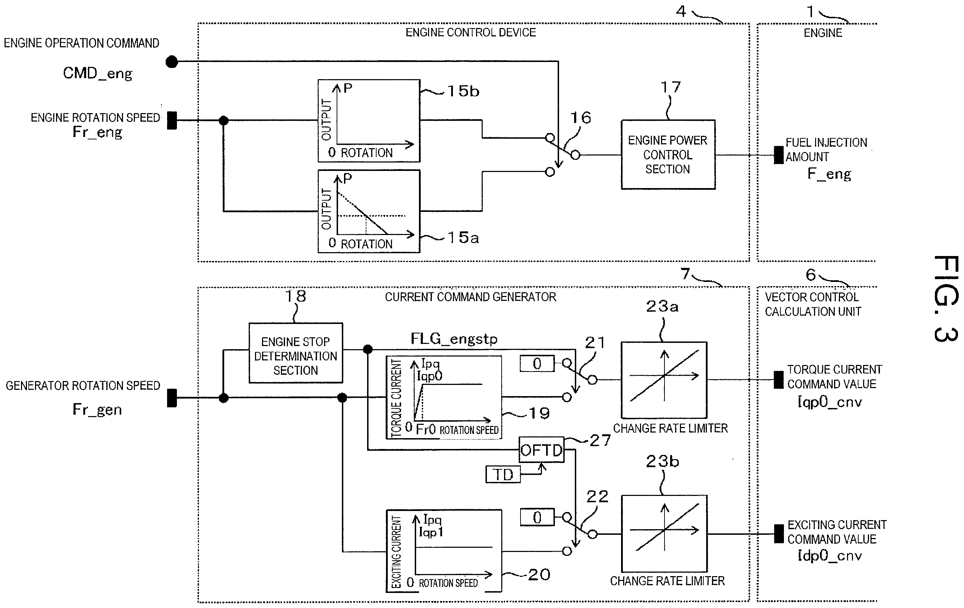

Figure 3 is a diagram showing the details of the engine control device and the generator control device according to an embodiment of the present invention.

The engine control device 4 receives the engine operation command CMD_eng and the engine rotation speed signal Fr_eng as inputs, and outputs the fuel injection F_eng. The fuel injection amount F_eng is input to the engine 1 to control the power from the engine 1.

Engine power tables 15a and 15b define the relationship between the engine rotation speed signal Fr_gen and each of engine power command values (0) P_eng_0 and (1) P_eng_1.

The engine power table 15a defines the relationship in which the engine power command value (0) P_eng_0 is always zero with respect to the engine rotation speed signal Fr_gen. That is, when the engine power table 15a is selected, the engine 1 in a stopped state remains stopped. In contrast, the engine 1 in an operative state decreases gradually in rotation speed and shifts to the stopped state.

On the other hand, the engine power table 15b defines the relationship in which the engine power command value (1) P_eng_1 varies (is not zero) with respect to the engine rotation speed signal Fr_gen. Here, the engine power table 15b defines the relationship in which the engine power command value (1) P_eng_1 decreases with increasing value of the engine rotation speed signal Fr_gen. In contrast, the generator control is such that the generation output from the generator is constant or increases consistently with the value of the generator rotation speed signal Fr_gen. This brings the engine power and the generation output from the generator into balance via the driving shaft. This enables stable generation control.

An engine power selector 16 switches between the engine power command value (0) P_eng_0 and the engine power command value (1) P_eng_1 depending on the engine operation command CMD_eng. The engine power selector 16 thus outputs the engine power command value P_eng. Here, when CMD_eng = 0, the engine power command value P_eng = P_eng_0. When CMD_eng = 1, the engine power command value P_eng = P_eng_0.

An engine power control section 17 receives the engine power command value P_eng as an input. The engine power control section 17 then calculates the fuel injection amount F_eng required to obtain a predetermined engine power.

The current command generator 7 receives the generator rotation speed signal Fr_gen, and outputs the torque current command Iqp0_cnv and the exciting current command Idp0_cnv. The torque current command Iqp0_cnv and the exciting current command Idp0_cnv are input to the vector control calculation unit 6 to control the generation output from the generator.

An engine stop determination section 18 receives the generator rotation speed signal Fr_gen as an input. The engine stop determination section 18 then calculates an engine stop control command CMD_engstp for allowing an engine stop control operation to be performed to urge the engine to be stopped using the generation power of the generator. A torque current characteristic table 19 defines a torque current command pattern Iqp0_cnv_1 for urging the engine to be stopped using the generation power of the generator. Here, the torque current characteristic table 19 indicates the following characteristics. The reference for the generator rotation speed signal Fr_gen is a predetermined value FR0 that is close to zero. For FR_gen > Fr0, Iqp0_cnv_1 = Iqp0, that is, Iqp0_cnv_1 is kept at Iqp0, regardless of the generator rotation speed signal Fr_gen. For Fr_gen ≤ Fr0, Ipq0_cnv_1 = 0 when Fr_gen = 0 and Ipq0_cnv_1 = Iqp0 when Fr_gen = Fr0. An exciting current output table 20 defines an exciting current command pattern Idp0_cnv_1 for urging the engine to be stopped using the generation power of the generator. Here, the exciting current output table 20 indicates the characteristic that the torque current command pattern Idp0_cnv_1 = Idp0, that is, Idp0_cnv_1 is kept at Idp0, regardless of the generator rotation speed signal Fr_gen.

A torque current selector 21 selects one of a torque current command (0) Iqp-cnv_0 = 0 and a torque current command (1) Iqp_cnv_1 in accordance with the engine stop control command CMD_engstp. The torque current selector 21 then outputs a torque current command value Iqp1_cnv. Here, for CMD_engstp = 0, the torque current command value Iqp1_cnv = Iqp0_cnv_0 (= 0). For CMD_engstp = 1, the torque current command value Iqp1_cnv = Iqp0_cnv_1. A change rate limiter 23a receives the torque current command value Iqp1_cnv as an input. The change rate limiter 23a limits the change rate of Iqp1_cnv to a predetermined value, and outputs the torque current command value Iqp0_cnv.

An exciting current selector 22 selects one of an exciting current command (0) Idp_cnv_0 = 0 and an exciting current command (1) Iqp_cnv_1 in accordance with a command flag of engine stop control with time delay CMD_engstp_td. The exciting current selector 22 then outputs an exciting current command value Idp1_cnv. Here, for CMD_engstp = 0, the exciting current command value Idp1_cnv = Idp0_cnv_0 (= 0). For CMD_engstp = 1, the exciting current command value Idp1_cnv = Idp0_cnv_1. A change rate limiter 23b receives the exciting current command value Idp1_cnv as an input. The change rate limiter 23b limits the change rate of Idp1_cnv to a predetermined value, and outputs the exciting current command value Idp0_cnv.

A time delay for off signal 27 receives the engine stop control command CMD_engstp as an input. The time delay for off signal 27 then increases the time required to shift from CMD_engstp = 1 to CMD_engstp = 0 by TD, and outputs a command flag of engine stop control with time delay CMD_engstp_td.

The above-described configuration can implement the following operation.

The engine control device 4 receives the engine operation command CMD_eng and the engine rotation speed signal Fr_eng as inputs. The engine control device 4 calculates the fuel injection amount F_eng for the engine 1. Furthermore, the current command generator 7 receives the generator rotation speed Fr_gen as an input. The current command generator 7 then calculates the torque current command value Iqp0_cnv and the exciting current command value Idp_cnv for the vector control calculation unit.

The configuration is based on the control scheme in which the engine power is determined in accordance with the engine rotation speed and in which the generation power of the generator is determined in accordance with the rotation speed of the generator. Since the engine and the generator rotate at the same speed, the engine generation control requires no transmission of information between the engine control and the generator control provided that the engine control device and the generator control device recognize the respective speeds.

That is, the configuration can provide a generation system for rail cars which controls the operation or generation output of the engine generator without the need for electric transmission of control information between the engine control system and the generation control system.

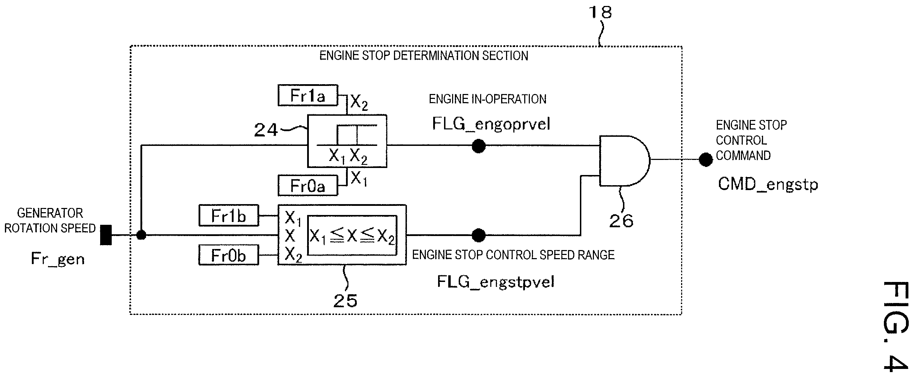

Figure 4 is a diagram showing the details of the engine stop determination section according to an embodiment of the present invention.

The engine stop determination section receives the generator rotation speed signal Fr_gen as an input to calculate the engine stop control command CMD_engstp.

An engine operation determination unit 24 outputs an engine in-operation flag FLG_engoprvel = 1 if the value of the generator rotation speed signal Fr_gen becomes larger than Fr1a and thereafter remains equal to or larger than Fr0a. The engine operation determination unit 24 outputs an engine in-operation flag FLG_engoprvel = 0 if the value of the generator rotation speed signal Fr_gen becomes smaller than Fr0a and thereafter remains equal to or smaller than Fr1a. When the engine in-operation flag FLG_engoprvel = 1, the value of the engine rotation speed, which is equal to the value of the generator rotation speed signal Fr_gen, becomes larger than Fr1a and thereafter remains equal to or larger than Fr0a. Thus, the engine operation determination unit 24 can determine that the engine is in operation. When the engine in-operation flag FLG_engoprvel = 0, the value of the engine rotation speed, which is equal to the value of the generator rotation speed Fr_gen, becomes smaller than Fr0a and thereafter remains equal to or smaller than Fr0a. Thus, the engine operation determination unit 24 can determine that the engine is stopped.

An engine stop control speed range determination unit 25 outputs an engine stop control speed range flag FLG_engstpvel = 1 when the value of the generator rotation speed signal Fr_gen is at least Fr0b and at most Fr1b. Furthermore, the engine stop control speed range determination unit 25 outputs an engine stop control speed range flag FLG_engstpvel = 0 when the value of the generator rotation speed Fr_gen is smaller than Fr0b or larger than Fr1b. When the engine stop control speed range flag FLG_engstpvel = 1, the value of the engine rotation speed, which is equal to the value of the generator rotation speed Fr_gen, falls within the range of at least Fr0b and at most Fr1b, which is a speed range in which the engine stop control is to be performed. Thus, the engine stop control speed range determination unit 25 determines that control needs to be performed to urge the engine to be stopped using the generation power of the generator 2. When the engine stop control speed range flag FLG_engstpvel = 0, the value of the engine rotation speed, which is equal to the value of the generator rotation speed Fr_gen, falls outside the range of at least FrOb and at most Fr1b, which is a speed range in which the engine stop control is to be performed. Thus, the engine stop control speed range determination unit 25 determines that control for urging the engine to be stopped using the generation power of the generator 2 is not required.

A logical AND calculation unit 26 finds a logical AND of the engine in-operation flag FLG_engstpvel and the engine stop control speed range FLG_engstpvel. The logical and calculation unit 26 then outputs the engine stop control command CMD_engstp.

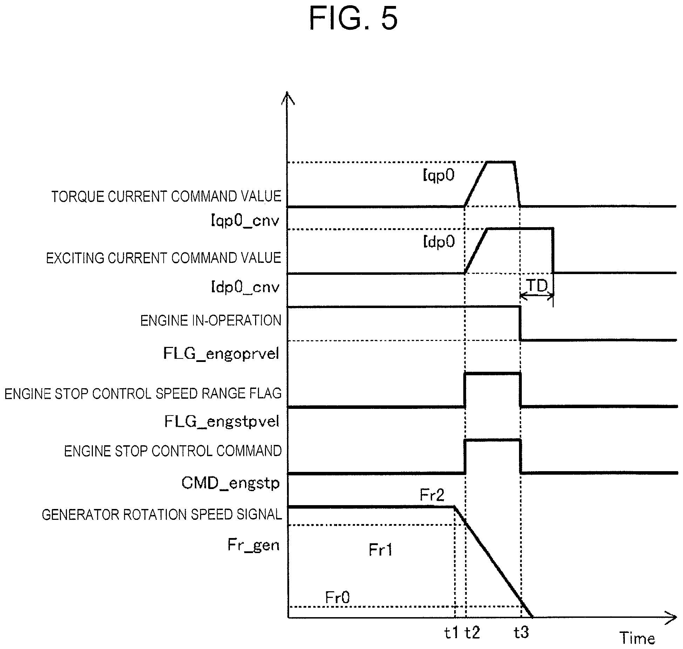

Figure 5 is a diagram showing an operation time chart for engine stop control according to an embodiment of the present invention.

At time t0, the value of the generator rotation speed signal Fr_gen is Fr2 (> Fr1a), and the engine in-operation flag FLG_engoprvel = 1

At time t1, the power from the engine is stopped. The value of the generator rotation speed Fr_gen, which is equal to the engine rotation, starts decreasing from Fr2.

At time t2, the value of the generator rotation speed signal Fr_gen becomes smaller than Fr1b, and the engine stop control speed range flag FLG_engstpvel = 1. At this time, the engine stop control command CMD_engstp = 1; the engine stop control command CMD_engstp is the logical AND of the engine in-operation flag FLG_engoprvel and the engine stop control speed range flag FLG_engstpvel. Since the engine stop control command CMD_engstp = 1, the engine stop control is started, and the converter main circuit 3 has its gate started. Furthermore, the torque current command value Iqp0_cnv and the exciting current command value Idp0_cnv rise to Iqp0 and Idp0, respectively, at predetermined change rates. Thus, the generator 2 generates generation power to perform the engine stop control for urging the engine to be stopped.

At time t3, the value of the generator rotation speed signal Fr_gen becomes smaller than Fr0b, and the engine stop control speed range flag FLG_engstpvel = 0. At this time, the engine stop control command CMD_engstp = 0; the engine stop control command CMD_engstp is the logical AND of the engine in-operation flag FLG_engoprvel and the engine stop control speed range flag FLG_engstpvel. Since the engine stop control command CMD_engstp = 0, the torque current command value Iqp0_cnv falls to 0 at a predetermined change rate. This causes the generation power of the generator 2 to fall to zero. When the time delay TD elapses, the torque current command value Idp0_cnv falls to zero at the predetermined change rate. Furthermore, the converter main circuit 3 has its gate stopped to end the engine stop control for urging the engine to be stopped.

At time t4, the value of the generator rotation speed signal Fr_gen becomes smaller than Fr0b, and the engine in-operation flag FLG_engoprvel = 0. Thus, the generator rotation speed signal Fr_gen = 0, thus completely stopping the engine.

## Claims

1. A generation system for rail cars comprising:
DC power generation (3) means for converting AC power generated by generation means (2) driven by an engine (1), into DC power;
engine rotation speed detection means (9a) for detecting a rotation speed of the engine;
generation means speed detection means (9b) for detecting a rotation speed of the generation means;
first control means (4) for adjusting driving power from the engine in accordance with the rotation speed of the engine; and
second control means (7) for adjusting generation power of the generation means in accordance with the rotation speed of the generation means;
wherein the first control means adjusts the driving power from the engine in accordance with an engine operation command from an operation command device and the rotation speed of the engine detected by the engine rotation speed detection means, and reduces the rotation speed of the engine if the engine operation command is an engine stop command;
wherein the second control means adjusts the generation power of the generation means in accordance with the rotation speed of the generation means detected by the generation means speed detection means,
**characterised in that**
when the rotation speed of the generation means is equal to or less than a first predetermined value, an engine stop is detected by the second control means and the second control means allows the generation means to generate a generation output to reduce the rotation speed of the generation means; and
wherein the first control means and the second control means are capable of executing engine stop control independently of each other without the second control means receiving command from the operation command device, and without the first control means and the second control means performing information communication between each other.

## Patentansprüche

1. Leistungserzeugungssystem für Schienenfahrzeuge, das Folgendes umfasst:
eine Gleichstromleistungserzeugungs- (3) Einrichtung zur Umwandlung von Wechselstromleistung, die von der durch einen Motor (1) angetriebenen Leistungserzeugungseinrichtung (2) erzeugt wurde, in Gleichstromleistung;
eine Motordrehzahl-Detektionseinrichtung (9a) zur Detektion einer Drehzahl des Motors;
eine Leistungserzeugungseinrichtungsdrehzahl-Detektionseinrichtung (9b) zur Detektion einer Drehzahl der Leistungserzeugungseinrichtung;
eine erste Steuereinrichtung (4) zum Einstellen der Antriebsleistung von dem Motor in Übereinstimmung mit der Drehzahl des Motors; und
eine zweite Steuereinrichtung (7) zum Einstellen der Erzeugungsleistung der Leistungserzeugungseinrichtung in Übereinstimmung mit der Drehzahl der Leistungserzeugungseinrichtung;
wobei die erste Steuereinrichtung die Antriebsleistung von dem Motor in Übereinstimmung mit einem Motorbetriebsbefehl von einer Betriebsbefehlsvorrichtung und der Drehzahl des Motors, die von der Motordrehzahl-Detektionseinrichtung detektiert wurde, einstellt und die Drehzahl des Motors verringert, wenn der Motorbetriebsbefehl ein Motoranhaltebefehl ist;
wobei die zweite Steuereinrichtung die Erzeugungsleistung der Leistungserzeugungseinrichtung in Übereinstimmung mit der Drehzahl der Leistungserzeugungseinrichtung, die von der Leistungserzeugungseinrichtungsdrehzahl-Detektionseinrichtung detektiert wurde, einstellt,
**dadurch gekennzeichnet, dass**
wenn die Drehzahl der Leistungserzeugungseinrichtung gleich einem ersten vorbestimmten Wert ist oder unter diesem liegt, ein Motoranhalten durch die zweite Steuereinrichtung detektiert wird, und die zweite Steuereinrichtung der Leistungserzeugungseinrichtung erlaubt, eine Erzeugungsausgabe zu erzeugen, um die Drehzahl der Leistungserzeugungseinrichtung zu verringern; und
wobei die erste Steuereinrichtung und die zweite Steuereinrichtung in der Lage sind, die Motoranhaltesteuerung unabhängig voneinander auszuführen, ohne dass die zweite Steuereinrichtung einen Befehl von der Betriebsbefehlsvorrichtung erhält, und ohne dass die erste Steuereinrichtung und die zweite Steuereinrichtung Informationskommunikation miteinander durchführen.

## Revendications

1. Système de génération pour véhicules ferroviaires comprenant :
des moyens de génération de courant continu (3) pour convertir du courant alternatif généré par des moyens de génération (2) entraînés par un moteur (1) en courant continu ;
des moyens de détection de vitesse de rotation de moteur (9a) pour détecter une vitesse de rotation du moteur ;
des moyens de détection de vitesse de moyens de génération (9b) pour détecter une vitesse de rotation des moyens de génération ;
des premiers moyens de commande (4) pour ajuster une puissance d'entraînement à partir du moteur en fonction de la vitesse de rotation du moteur ; et
des seconds moyens de commande (7) pour ajuster une puissance des moyens de génération en fonction de la vitesse de rotation des moyens de génération ;
dans lequel les premiers moyens de commande ajustent la puissance d'entraînement à partir du moteur conformément à une instruction de fonctionnement de moteur provenant d'un dispositif d'instruction de fonctionnement et de la vitesse de rotation du moteur détectée par les moyens de détection de vitesse de rotation de moteur, et réduisent la vitesse de rotation du moteur si l'instruction de fonctionnement de moteur est une instruction d'arrêt de moteur ;
dans lequel les seconds moyens d'instruction ajustent la puissance de génération des moyens de génération en fonction de la vitesse de rotation des moyens de génération détectée par les moyens de détection de vitesse des moyens de génération, **caractérisé en ce que** lorsque la vitesse de rotation des moyens de génération est égale ou inférieure à une première valeur prédéterminée, un arrêt de moteur est détecté par les seconds moyens de commande et les seconds moyens de commande permettent aux moyens de génération de générer une sortie de génération pour réduire la vitesse de rotation des moyens de génération ; et
dans lequel les premiers moyens de commande et les seconds moyens de commande sont capables d'exécuter une commande d'arrêt de moteur indépendamment les uns des autres sans que les seconds moyens de commande reçoivent une instruction à partir du dispositif d'instruction de fonctionnement, et sans que les premiers moyens de commande et les seconds moyens de commande effectuent une communication d'informations entre eux.
